# EUROPEAN PATENT APPLICATION

(11) **EP 3 716 531 A1**
(43) Date of publication of application: **30.09.2020**
(21) Application number: 19166150.3
(22) Date of filing: 29.03.2019
(51) Int. Cl.: H04L 12/24

(54) **METHOD AND CONTROLLER FOR CONFIGURING NODES IN AN INDUSTRIAL NETWORK**

(71) Applicant: Siemens Aktiengesellschaft, 80333 München (DE)
(72) Inventor: Kulkarni, Vivek, 82008 Unterhaching (DE); Zirkler, Andreas, 81735 München (DE); Gottwald, Sven, 90475 Nürnberg (DE); Riedl, Johannes, 84030 Ergolding (DE)

(57) **Abstract**

The embodiments described herein relate to techniques for configuring a software-defined and/or time-sensitive network. A unified usage of OPC UA for configuration messages and for network management service according to the embodiments eliminates existing problems of an inevitably separated configuration of forwarding nodes and industrial end-devices by different protocols according to the state of the art. Additional expenditure regarding a required protocol stack to be implemented on the nodes is advantageously avoided. Additionally, a network management of such a unified industrial network requires less effort compared to existing industrial networks. The protocol OPC UA warrants a broad acceptance by automation system suppliers and operators who are growingly applying this protocol for communication of end-devices in the industrial automation domain. Defining a switch information model as part of an OPC UA companion specification enables a seamless integration of SDN configuration into the existing information model for automation purposes. Different suppliers are thereby enabled to build supplier-specific extensions based on a companion specification.

## Description

### TECHNICAL FIELD

Embodiments described herein generally relate to communications within industrial networks, and in particular, to techniques for defining operations of a software-defined and/or time-sensitive network.

### BACKGROUND

Industrial networks differ from traditional communication networks in that they handle control and monitoring of physical processes that are often running in harsh environments, under real time and data integrity constraints, and with the expectation of continuous and reliable operation. While hierarchically switched networks have enabled a vast number of industrial nodes to be connected, their structure remains relatively static. The dependence on a static network means industrial application developers are often constrained by the network when developing industrial applications.

There are two realms of concern when considering networks switching technology - the control plane and the data plane. The data plane is the traffic flowing through a switch. The control plane is concerned with the management and configuration of the switch to control how the data traffic is directed, shaped, or segmented into various portions of the network. In the traditional switching technologies that are still common in industrial automation, each switch manages its own control plane. Therefore, each switch is configured individually and acts somewhat autonomously from its neighboring switches.

Software-defined networking, or SDN, presents an alternative to this architecture. SDN is a network architecture in which the system that makes decisions about on which path traffic is sent - also referred to as control plane - is decoupled from the underlying systems that forward traffic to the selected destination - also referred to as data plane. While the data plane is effected by forwarding nodes - which at least temporarily act as a switch - in the network, the control plane is commonly executed by a controller with a software responsible for the behavior of such software-defined network.

Although SDN obliviates many problems associated with traditional switching technologies, further challenges arise with an implementation in the industrial domain. One major concern is that in an industrial automation setup, forwarding nodes in the network still have to be configured separately from industrial end-devices:
- As to the forwarding nodes, dedicated SDN protocols are used to configure nodes and flows of the software defined network during runtime, such as the protocols OpenFlow and/or OVSDB (Open vSwitch Database). Alternatively - in the case of a hybrid architecture, where traditional switching technologies are at least additionally applied - communication devices, such as network switches or routers, are configured by a network controller using a legacy network management protocols such as Simple Network Management Protocol (SNMP) or Network Configuration Protocol (NETCONF).
- Industrial end-devices, on the other hand, are configured or gathered during runtime using a different protocol such as Open Platform Communications Unified Architecture (OPC UA) protocol in Manufacturing Execution Systems or (MES) Enterprise Resource Planning (ERP), Supervisory Control and Data Acquisition (SCADA), or other industrial cloud protocols. OPC UA is predominantly used in industrial automation environments of today for establishing communication relations between automation end-devices.

The existing separation in the configuration of forwarding nodes and industrial end-devices by different protocols results not only in cumbersome and time-consuming procedures but also in additional expenditure regarding a required protocol stack of the industrial end-devices. Industrial end-devices which are, for example, operated by an OPC-UA protocol have to support a user-network interface (UNI) protocol to exchange messages - including requests for communication services from the network - in addition to the OPC-UA protocol. In the reverse direction, OPC-UA expressed configuration messages received by an end-device have to be converted to UNI compliant messages by the receiving end-device. Still further, the same messages must be converted from the UNI protocol to the Netconf protocol used by the network controller as in the case of a hybrid model.

Accordingly, there is a need in the art to provide means for configuring nodes in an industrial network with a software defined network configuration which obliviate the drawbacks in the existing methods.

### SUMMARY

Embodiments herein generally involve a method for configuring nodes in a software defined network by at least one controller.

In one embodiment, a method is disclosed which includes the steps of:
- operating a software defined network configuration amongst a plurality of nodes in the industrial network by a network management service, the network management service comprising an information model according to an Open Platform Communication Unified Architecture (OPC-UA), the network management service exchanging OPC UA configuration messages with the plurality of nodes; and;
- configuring end-devices amongst the plurality of nodes in the industrial network by a user configuration service, the user configuration service exchanging OPC UA configuration messages with the plurality of nodes.

According to an embodiment, at least one of said plurality of nodes is at least temporarily configured as one of said end-devices and/or as a forwarding node. This means that any node in the industrial network may act as an end-device, as a forwarding node or as a combination of both.

According to an embodiment, operating the software defined network configuration includes establishing the software defined network configuration and/or modifying the software defined network configuration during a runtime of the network management service. Former limitations using a network configuration management according to the state of the art are no longer applicable: The configuration of the software defined network does not necessarily precede a configuration of the end-devices and may also occur at runtime.

According to an embodiment, the industrial network is of a time sensitive nature, which is a basic requirement for the majority of industrial networks due their strict timing requirements that need to be controlled and monitored. The resulting network is also referred to as a time-sensitive software defined network, or TsSDN.

According to an embodiment, the time-sensitive architecture of the industrial network is implemented according to a specification developed by the Institute of Electrical and Electronics Engineers, or IEEE, as detailed in IEEE 802.1Q, IEEE 802.1Qcc and accompanying standards. The industrial network may include multiple talkers, or sources of data, and multiple receivers. Any number of interconnecting nodes - acting as bridges or switches - may be connected between each of the talkers and the receivers. According to an embodiment, the time-sensitive software defined network may include a fully distributed network, a centralized network management, or a fully centralized network management. These network management models have the following properties:
- In the fully centralized network management, communication service requirements are directly configured at a controller by management over a user defined protocol. The centralized network management service determines resources in the time-sensitive network in order to configure forwarding nodes accordingly.
- In the fully decentralized network management or fully distributed network management, talkers announce offered streams, which can be subscribed by listeners. The network nodes reserve resources in a decentralized manner within the time-sensitive network. No central management entity is necessary in this approach.
- In the partially decentralized network management, a controller is present. However, data from end-devices is passed to the edge bridge closest to the end device over a standardized protocol and then forwarded to the controller.

According to an embodiment, the OPC UA information model is extended by an OPC UA Companion Standard including a switch information model defining the software defined network configuration.

According to an embodiment, the network management service provides a publish-subscribe-based service for the discovery and/or management of nodes. The discovery of nodes supports a topology discovery of the network's infrastructure. Using end device discovery mechanisms based on publish-subscribe-based - or pub-sub - configuration further supports an extended node management.

According to an embodiment, a controller for configuring nodes in an industrial network the controller is disclosed. The controller may comprise one or more modules, namely a network management service module and a user configuration service module, both of which may be distributed amongst one or more physical assets connected to the industrial network.

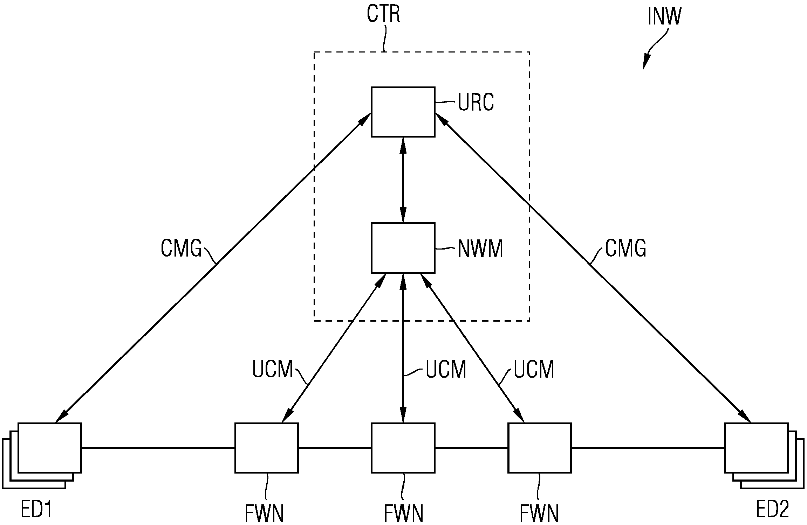

### DESCRIPTION OF THE DRAWING

The objects as well as further advantages of the present embodiments will become more apparent and readily appreciated from the following description of the preferred embodiments, taken in conjunction with the accompanying drawing in which the FIG shows a simplified structural view of an industrial network including a plurality of interconnected nodes and further including functional components according to the embodiments.

### DETAILED DESCRIPTION

FIG shows an exemplary industrial network INW. The network is built by a plurality of nodes, whereby some of these nodes are at least temporarily configured as end-devices ED1, ED2 and some other nodes at least temporarily configured as forwarding nodes FWN. Some of the nodes in the industrial network INW may alternatively act as an end-device ED1, ED2 and as a forwarding node FWN at the same time, for example, a sensor acting as a data delivery device and as a forwarding node at the same time.
The industrial network INW is a software defined network wherein a data plane is effected by the forwarding nodes, which at least temporarily act as a switch or a bridge as symbolized by lines connecting the forwarding nodes with each other and/or connecting the forwarding nodes with respective end devices ED1,ED2.

A control plane of the software defined industrial network INW is executed by a controller CTR, more specifically by a network management service module NWM for operating the SDN configuration amongst the plurality of nodes.

A further user configuration service module URC is responsible for configuring the end-devices ED1,ED2. This user configuration service module includes a - not shown - interface for exchanging OPC UA configuration messages CMG with the plurality of nodes, particularly with the end devices ED1,ED2.

The network management service module NWM comprises - not shown - an OPC UA Information Model - or OPC UA IM - which is a semantically enriched and graph-based data information model for automation purposes. The OPC UA IM is optionally extended by - not shown - Companion Specification allowing for an integration of SDN configuration into the existing information model.

The network management service module NWM includes a - not shown - interface for exchanging OPC UA configuration messages UCM with the plurality of nodes in order to control the SDN configuration.

The exemplary industrial network as shown in the FIG is of a time sensitive nature, e.g. implemented according to a specification developed by the Institute of Electrical and Electronics Engineers, or IEEE, as detailed in in IEEE 802.1Q, IEEE 802.1Qcc and accompanying standards. The network INW includes multiple talkers ED1, or sources of data, and multiple receivers ED2. The forwarding FNW nodes are interconnected between the talkers and receivers.

The exemplary industrial network as shown in the FIG is a fully centralized network management which means that end-devices ED1,ED2 communicate their requirements directly towards the user configuration service module URC of the controller CTR by exchanging OPC UA configuration messages CMG. The controller CTR uses the communicated requirements for determining resources and time slots in the time-sensitive network in order to configure the end-devices ED1, ED2 and forwarding nodes FWN accordingly.

The network management service module NWM of the controller CTR for operating a software defined network configuration amongst a plurality of nodes in the industrial network, the network management service module comprising an information model according to an Open Platform Communication Unified Architecture (OPC-UA), the network management service module including an interface for exchanging OPC UA configuration messages with the plurality of nodes

The protocol of choice for enabling a cross-layered data access is OPC UA. OPC UA is an industrial standard protocol of the OPC Foundation for manufacturer-independent communication with the purpose of interchanging industrial data, in particular in process and factory automation.

A unified usage of OPC UA for configuration messages and for network management service messages according to the embodiments eliminates existing problems of an inevitably separated configuration of forwarding nodes and industrial end-devices by different protocols according to the state of the art. Additional expenditure regarding a required protocol stack to be implemented on the nodes according to the state of the art is advantageously avoided by the embodiments.

Additionally, a network management of such a unified industrial network requires less efforts compared to existing industrial networks. The protocol OPC UA warrants a broad acceptance by automation system suppliers and operators who are growingly applying this protocol for communication of end-devices in the industrial automation domain.

The open nature of OPC UA, which enables the definition of extensions to its core, the OPC UA Information Model, are referred to as Companion Specifications. Defining a switch information model as part of an OPC UA companion specification enables a seamless integration of SDN configuration into the existing information model for automation purposes. Different suppliers are thereby enabled to build supplier-specific extensions based on a companion specification.

A recent UA PubSub Specification (Part 14) of OPC UA, released on February 2018, is including a publish-subscribe (pub-sub) communication model which supports one-to-many data exchanges. For this pub-sub communication model, OPC UA applications do not directly exchange requests and responses. Instead, publishers, such as OPC UA servers, send messages to a message oriented middleware to publish data, without knowledge of subscribers, and subscribers, such as OPC UA clients, may receive the data through the message oriented middleware without knowledge of the publishers. The message-oriented middleware is software or hardware infrastructure supporting sending and receiving messages between distributed systems. The OPC UA pub-sub communication model may send its data connectionless to OPC UA clients without the need for a resource consuming connection and facilitates faster response times to send data from the end-devices, e.g. data producing sensor devices, to a data consumer, e.g. a cloud space.

The discovery of nodes supports a topology discovery of the network's infrastructure. Using end device discovery mechanisms based on publish-subscribe-based configuration further supports an extended node management.

It is to be understood that the elements and features recited in the appended claims may be combined in different ways to produce new claims that likewise fall within the scope of the present invention. Thus, whereas the dependent claims appended below depend from only a single independent or dependent claim, it is to be understood that these dependent claims can, alternatively, be made to depend in the alternative from any preceding or following claim, whether independent or dependent, and that such new combinations are to be understood as forming a part of the present specification.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description.

## Claims

1. A method for configuring nodes in an industrial network by at least one controller, the method including the steps of:
- operating a software defined network amongst a plurality of nodes in the industrial network by a network management service, the network management service comprising an information model according to an Open Platform Communication Unified Architecture (OPC-UA), the network management service exchanging OPC UA configuration messages with the plurality of nodes; and;
- configuring end-devices amongst the plurality of nodes in the industrial network by a user configuration service, the user configuration service exchanging OPC UA configuration messages with the plurality of nodes.

2. The method according to claim 1, wherein at least one of said plurality of nodes is at least temporarily configured as one of said end-devices and/or as a forwarding node.

3. The method according to claim 1, wherein operating the software defined network configuration includes establishing the software defined network configuration and/or modifying the software defined network configuration during a runtime of the network management service.

4. The method according to claim 1, wherein the industrial network is a time sensitive network.

5. The method according to claim 1, wherein the industrial network is operated by one of
- a fully distributed configuration;
- a centralized network distributed user configuration; and;
- a fully centralized configuration;
as specified in IEEE 802.1Qcc.

6. The method according to claim 1, wherein the information model is extended by an OPC UA Companion Standard including a switch information model defining the software defined network configuration.

7. The method according to claim 1, wherein the network management service provides a publish-subscribe-based service for the discovery and/or management of the nodes.

8. A controller for configuring nodes in an industrial network the controller including:
- a network management service module for operating a software defined network configuration amongst a plurality of nodes in the industrial network, the network management service module comprising an information model according to an Open Platform Communication Unified Architecture (OPC-UA), the network management service module including an interface for exchanging OPC UA configuration messages with the plurality of nodes; and;
- a user configuration service module for configuring end-devices amongst the plurality of nodes in the industrial network, the user configuration service module including an interface for exchanging OPC UA configuration messages with the plurality of nodes.
